Europäisches Patentamt

European Patent Office

Office européen des brevets

(11) Veröffentlichungsnummer: **0 195 916 B1**

(12) **EUROPÄISCHE PATENTSCHRIFT**

(45) Veröffentlichungstag der Patentschrift: **08.05.91**   (51) Int. Cl.⁵: **H02B 15/04**

(21) Anmeldenummer: **86101855.4**

(22) Anmeldetag: **13.02.86**

(54) **Mosaiktafel mit geschlossener Frontseite.**

(30) Priorität: **25.02.85 DE 3506582**

(43) Veröffentlichungstag der Anmeldung:
**01.10.86 Patentblatt 86/40**

(45) Bekanntmachung des Hinweises auf die
Patenterteilung:
**08.05.91 Patentblatt 91/19**

(84) Benannte Vertragsstaaten:
**AT CH DE FR GB IT LI**

(56) Entgegenhaltungen:
**EP-A- 0 040 409**
**FR-A- 2 316 679**
**US-A- 4 419 838**

(73) Patentinhaber: **Siemens Aktiengesellschaft**
**Wittelsbacherplatz 2**
**W-8000 München 2(DE)**

(72) Erfinder: **Maier, Georg**
**Neue Bergstrasse 11**
**W-8521 Weisendorf(DE)**

## Beschreibung

Die Erfindung betrifft eine Mosaiktafel mit geschlossener Frontseite nach dem Oberbegriff des Patentanspruches 1.

Eine solche Mosaiktafel ist aus der Siemens-Druckschrift "Mosaiktechnik, ein System - zwei Größen" mit der Bestellnummer A19100-E142-B227 (114 544 WS 8842) vom August 1984 und ans den Anmeldungen EP-A-0 040 409 und FR-A-2 316 679 bekannt.

Die aus Bausteinen mit jeweils abnehmbarer Frontplatte mit quadratischer Frontkontur bestehende Mosaiktafel weist überwiegend sogenannte Blindbausteine ohne jegliche Oberflächensymbole, dazwischen Blindbausteine mit rein visuellen unveränderlichen Symbolen zur Nachbildung und Darstellung von beliebigen Verteilungsanordnungen sowie Aktivbausteine mit veränderlichen Anzeige- und/oder Betätigungsmitteln auf. Bei entsprechend klein dimensionierten Anzeige- und/oder Betätigungsmitteln können diese bei entfernten Frontplatten in die einzelnen Blindbausteine eingefügt und darin lösbar gehalten werden.

Bei der Wartentechnik gemäß "Siemens-Katalog" W13, 1984 ist es bekannt, an in gleichbleibenden Abständen parallel angeordneten Tragschienen (Kompaktraster) sog. Standardfelder mit einem frontseitigen Kantenverhältnis 2 : 1 zu befestigen. Diese Standardfelder bestehen aus einer Wanne mit Lampenkammern und/oder Drucktastern und einem Deckblech mit Anzeigefenstern sowie Durchbrechungen für herausragende Betätigungsmittel. An der Unterseite der Wanne ragen Anschlußkontakte für bis zu 3 Stecker. Für den Einbau größerer Geräte oder Instrumente in solche Kompaktraster sind von der Vorderseite zusammen mit dem betreffenden Gerät oder Instrument einschnappbare oder von der Rückseite her anschraubbare Bleche vorgesehen. Die nicht mit Anzeige- und/oder Betätigungsmitteln oder Instrumenten versehenen Blindfelder sind plattenförmig im Seitenverhältnis 2 : 1 ausgebildet und ebenfalls ausschließlich am Kompaktraster gehalten.

Der Erfindung liegt die Aufgabe zugrunde, tragrasterlose Mosaiktafeln der eingangs genannten Art aus aneinander lösbar gehaltenen Bausteinen auch für die Wartentechnik und allgemein Mosaiktafeln in tragrasterloser Ausführung zu schaffen, die zur Bildung einer bestimmten Tafelfläche weniger Bausteine benötigt, wobei eine wahlweise leichtlösbare Halterung unterschiedlich großer Aktivbausteine in den Bausteinen sowie gegebenenfalls von abweichend dimensionierten Geräten oder Apparaten in durch Weglassen oder Entfernen von mindestens einem Baustein entstehenden Lücken möglich ist.

Die Lösung der gestellten Aufgabe gelingt durch die kennzeichnenden Merkmale des Anspruches 1.

Dabei kann der Hauptanteil der Tafeloberfläche aus etwa der halben Zahl von doppelt so großflächigen rechteckigen Bausteinen gebildet sein, an die an beliebigen Seitenwänden auch bekannte quadratische Bausteine eingefügt werden können. Im Innern der rechteckigen Bausteine können nicht nur Aktivbausteine mit passender rechteckförmiger Frontkontur, sondern auch bis zu zwei Aktivbausteinen quadratischer Frontkontur rastend lösbar eingefügt werden und es besteht die Möglichkeit, in eine durch die Entnahme von mindestens einem rechteckförmigen Baustein entstehende Lücke größere rechteckförmige bzw. quadratische Instrumente oder Geräte einzufügen und mittelbar oder unmittelbar rastend zu halten.

Um bei einer solchen Kombination von rechteckigen und quadratischen Bausteinen einen einheitlichen visuellen Eindruck zu erzeugen, kann die verdeckte Frontplatte eine Mittelnut erhalten, die den Eindruck zweier Quadrate erweckt, so daß der Eindruck einer Mosaiktafel aus nur quadratischen Bausteinen besteht.

Die Halterung von Instrumenten oder Geräten in den Lücken kann durch Winkelbausteine mit ebener Frontfläche vorgenommen werden, wobei die ebene Frontfläche nur an ihrer einen Kante mit einer im rechten Winkel angeordnete Befestigungswand verbunden ist und somit leicht an sie durchragende Geräteteile angepaßt werden. Diese Winkelbausteine können ferner auch als unbestückte Abdeckungen für Lücken vorgesehen sein, die nicht breiter als zwei quadratische Bausteine sind.

Weitere Einzelheiten der Erfindung sind anhand der Zeichnung nachfolgend näher erläutert. Es zeigen:

Fig. 1    ein Ausführungsbeispiel eines Bausteins mit Haltvorrichtungen (Baustein der ersten Art) in Draufsicht ohne Frontplatte.

Fig. 2    den Gegenstand der Fig. 1 in perspektivischer Darstellung.

Fig. 3    eine dazu passende Frontplatte in perspektivischer Darstellung.

Fig. 4    perspektivisch die in Fig. 1 gestrichelt angedeutete Zwischenwand und

Fig. 5    in perspektivischer Darstellung einen Teil eines Ausführungsbeispiels eines Bausteins mit Haltenuten (Baustein zweiter Art)

Fig. 6    ein Detail im Schnitt

Fig. 7    in perspektivischer Darstellung einen Winkelbaustein

Fig. 8    eine Winkelbausteingruppe

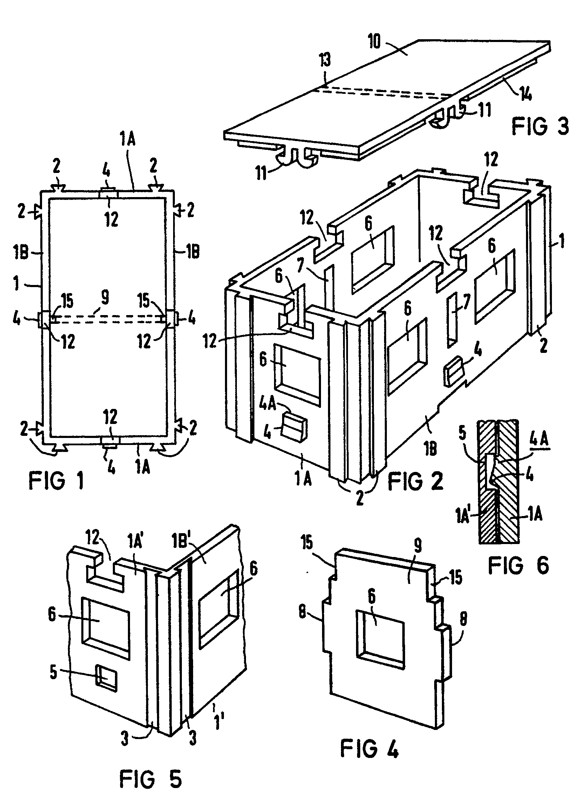

Der Baustein 1 nach Fig. 1, 2 und 5 aus Kunststoff ist quaderförmig gestaltet und weist schmälere Seitenwände 1A sowie längere Seitenwände 1B auf, deren Frontkontur ein Seitenverhältnis 2 : 1 hat. Jede Seitenwand 1A, 1B weist an ihren Außenseiten zwei kantenparallele hinterschnittene Haltevorsprünge 2 bzw. bei den Bausteinen 1' nach Fig. 5 an den Seitenwänden 1A', 1B' dazu passende Haltenuten 3 auf. Außerdem ist symmetrisch zwischen den beiden Haltevorsprüngen 2 bzw. Haltenuten 3 an jeder Außenseite der Seitenwände 1A, 1B eine Rastnase 4, bzw. an den Seitenwänden 1A', 1B' eine dazu passende Rastkante 5 unterhalb einer jeweils symmetrisch angeordneten Durchbrechung 6 mit Haltekanten an den Seitenwänden 1A, 1A', bzw. zweier solcher Durchbrechungen 6' an den Seitenwänden 1B, 1B' vorgesehen. Um eine Entnahme von Bausteinen 1 (Fig. 2) zur Frontseite der Mosaiktafel und eine Entnahme der Bausteine 1' (Fig. 5) zur Rückseite hin mit einfachen herstellbaren Bausteinen, bei denen die Haltevorsprünge 2 bzw. Haltenuten 3 durchgehend erstreckt sind, zu ermöglichen und eine Fixierung in der Arbeitsstellung zu sichern, kann zum Zusammenwirken mit der Rastkante 5 gemäß Fig. 6 die Rastnase 4 an der Unterkante abgeschrägt sein und an der Oberkante eine im rechten Winkel zur Seitenwand 1A vorragende verschiebungssichernde Stützfläche 4A aufweisen, die mit der Gegenfläche in der Seitenwand 1A' in Eingriff steht.

An den längeren Seitenwänden 1B, 1B' sind mittig angeordnete Aufnahmeöffnungen 7 für Vorsprünge 8 an den Seitenkanten einer Zwischenwand 9 (Fig. 4) vorgesehen.

Die Zwischenwand 9 kann an den Innenseiten der Seitenwände 1B, 1B' eng anliegend mit ihren Vorsprüngen 8 in die Aufnahmeöffnung 7 eingeschnappt fixiert werden und teilt den rechteckförmigen Innenraum des Bausteines 1, 1' im Bedarfsfall in zwei Teilräume mit quadratischer Frontkontur auf. Sofern in den Baustein weder ein frontseitig abschließender nicht dargestellter großer Aktivbaustein noch zwei entsprechend kleinere Aktivbausteine eingerastet sind, wird der Baustein 1, 1' durch eine in Schnappverbindung gehaltene Frontplatte 10 nach Fig. 3 verschlossen. Hierzu sind an der Unterseite der Frontplatte 10 vorragende Schnappglieder 11 angeformt, die in hinterschnittene Randausnehmungen 12 an den Oberkanten des Bausteines 1, 1' eingreifen. Die Frontplatte 10 kann durch eine Mittelnut 13 visuell in zwei Quadrate unterteilt sein.

Die in dem Innenraum bzw. den Teilräumen in an sich bekannter Weise rastend gehaltenen, nicht dargestellten Aktivbausteine können mit angeformten rechteckförmigen oder quadratischen Frontflächen versehen sein oder aber mit ihren Stell- bzw. Bedienungsorganen durch nicht dargestellte Ausnehmungen aus der Frontplatte 10 ragen. Zur verschiebungshindernden Lagerung der Frontplatte 10 am Baustein 1, 1', kann an der Plattenunterseite ein vom Rand nach innen abgesetzter Rahmen 14 angeformt sein. Die Höhe der Zwischenwand 9 reicht bis zur Oberkante des Bausteins 1, 1' und kann zur Bildung eines Zwischenraumes 15 zwischen den Innenseiten der Seitenwände 1B, 1B' und den Seitenkanten am oberen Teil entsprechend zurückgesetzt sein.

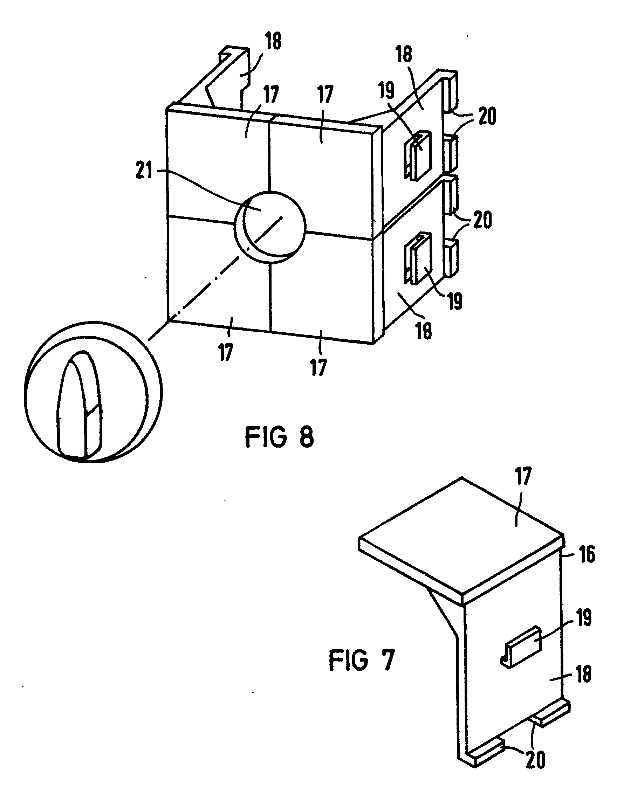

Die durch Entnahme mindestens eines Bausteins 1, 1' oder mindestens eines nicht dargestellten quadratischen Bausteins entstehende Lücke kann durch eine entsprechende Zahl von einfügbaren Winkelbausteinen 16 gemäß Fig. 7 geschlossen werden. Diese Winkelbausteine 16 können an ihren Frontflächen 17 leicht nachträglich mit angepaßten Ausnehmungen 21 (Fig. 8) versehen werden, durch die hindurch z.B. Betätigungswellen für rückseitig angeordnete Schaltgeräte herausgeführt sind, wobei die Schaltgeräte oder ähnliche Geräte lösbar - z.B. in die Durchbrechungen 6 der Bausteine durch darin einrastende Federzungen von Halteorganen oder in anderer bekannter Weise - gehalten werden.

In Fig. 8 sind für zwei fehlende Bausteine 1 bzw. 1' oder vier quadratische Bausteine einzusetzende vier Winkelbausteine 16 mit ihren an jeweils einer Ecke vorgesehene Teilausnehmungen, die zusammen die Ausnehmung 21 bilden, gezeigt. Die an der Befestigungswand 18 angebrachten Befestigungswinkel 19 sind durch entsprechende Durchbrechungen 6 gesteckt und die Vorsprünge 20 an den der Frontfläche 17 abgewandten Unterkante sind federnd mit den Unterkanten der Bausteine 1, 1' in Eingriff gehalten.

Für die oberseitige Abstützung und Fixierung von der Lücke bzw. den Lücken und der Mosaiktafel füllenden größeren Geräten oder Instrumenten von rechteckförmiger oder quadratischer Kontur kann in nicht dargestellter Weise je ein als Tragorgan dienender Tragrahmen vorgesehen sein, der die Frontseiten der Geräte oder Instrumente umgibt und sich an den Frontkanten der benachbarten Bausteine, bzw. deren Frontplatten abstützt. Die Geräte oder Instrumente können auf ihren Rückseiten mit Halteorganen verbunden sein, die Federzungen aufweisen, die in den Durchbrechungen 6 rastend gehalten sind. Es sind auch andere bekannte Maßnahmen zur Halterung solcher Geräte bzw. Instrumente möglich.

## Ansprüche

1.  Mosaiktafel mit geschlossener Frontseite, die tragrasterlos aus lösbar eng aneinandergereihten, mit ihren lösbaren Frontplatten (10) bündig zueinanderliegenden und rückseitig offenen quaderförmigen Bausteinen (1) zweier unterschiedlicher Arten in abwechselnder Anordnung gebildet ist, wobei alle Bausteine an ihren rechteckförmigen Seitenwänden Durchbrechungen (6) mit zur Frontseite parallelen Haltekanten für lösbar federnd gehaltene Sonderbausteine (16) sowie angeformte, in gegenseitig lösbarem Eingriff stehende verschiebungshemmende Rastmittel (4) sowie je Seitenwand zwei angeformte, im gegenseitigen lösbaren Schiebeeingriff stehende, kantenparallele Haltemittel (2,3) beiderseits der Durchbrechungen und der Rastmittel aufweisen,
**dadurch gekennzeichnet,**
daß die Bausteine (1, 1') mit lösbar federnd gehaltenen Frontplatten (10) eine rechteckige Frontkontur mit einem Seitenverhältnis 2 : 1 haben und an ihren beiden längeren Seitenwänden (1A, 1A') jeweils zwei Durchbrechungen (6) mit Haltekanten sowie symmetrisch zwischen diesen jeweils Aufnahmeöffnungen (7) für Vorsprünge (8), an den Seitenkanten einer lösbar darin fixierten raumteilenden Zwischenwand (9) aufweisen, die ihrerseits für die Halterung von einfügbaren Aktivbausteinen quadratischer Kontur eine Durchbrechung (6) mit Haltekanten aufweist.

2. Mosaiktafel nach Anspruch 1,
**dadurch gekennzeichnet,**
daß die Haltemittel (2, 3) über die Bausteinhöhe durchgehend erstreckt sind und das vorspringende Rastmittel (4) an den Seitenwänden (1A, 1B) des Bausteines der einen Art (1) eine verschiebungssichernde Stützfläche (4A) zum Eingriff mit einer Gegenfläche am Rastmittel des Bausteines der anderen Art (1') aufweist.

3. Mosaiktafel nach Anspruch 1,
**dadurch gekennzeichnet,**
daß an der Unterseite der Frontplatte (10) ein vom Rand nach innen abgesetzter Rahmen (14) angeformt ist, der an den Innenseiten der Seitenwände (1A, 1B, 1A', 1B') verschiebungshindernd anliegt.

4. Mosaiktafel nach Anspruch 1,
**dadurch gekennzeichnet,**
daß die durch Fehlen mindestens eines Bausteines (1, 1') gebildete Lücke zur Aufnahme von außerhalb eines Bausteines anzuordnenden Meß-, Schalt- und/oder Steuergeräten in Verbindung mit an mindestens einem Baustein gehaltenen Trag- und/oder Abdeckorganen benützt ist.

5. Mosaiktafel nach Anspruch 4,
**dadurch gekennzeichnet,**

daß die Tragorgane als Tragrahmen ausgebildet sind, die sich an den Frontplatten (10) der Bausteine (1, 1') abstützen, wobei die in den Tragrahmen fixierten Geräte in Rastverbindung mit den Durchbrechungen (6) der Seitenwände von benachbarten Bausteinen gehalten sind.

6. Mosaiktafel nach Anspruch 4,
**dadurch gekennzeichnet,**
daß das Abdeckorgan als Winkelbaustein (16) mit einer einseitig im rechten Winkel über eine Befestigungswand (18) vorragenden quadratischen Frontfläche (17) mit der Kantenlänge eins aufweist und an der Außenseite der Befestigungswand (18) ein im Eingriff mit einer Durchbrechung (6) des benachbarten Bausteins (1, 1') bringbarer Befestigungswinkel (19) angeformt ist und daß die Unterseite der Befestigungswand (18) mit federnden, im Eingriff mit der Unterkante des benachbarten Bausteines (1, 1') bringbaren Vorsprüngen (20) versehen ist.

7. Mosaiktafel nach Anspruch 6,
**dadurch gekennzeichnet,**
daß in der Frontfläche bzw. den Frontflächen von Winkelbausteinen Ausnehmungen (21) für Geräte oder Instrumente angebracht sind.

## Claims

1. Mosaic board with closed front side, which is formed without carrying grid from building blocks (1) which are mounted closely side by side in a releasable manner, with their releasable front plates (10) lying flush with one another, the blocks being open on the rear side and being in the form of rectangular blocks, of two different types in alternating arrangement, wherein all building blocks on their rectangular side walls have perforations (6) with holding edges parallel to the front side for special building blocks (16), held in a releasable resilient manner, as well as integrally moulded displacement-inhibiting stop means (4) in mutually releasable engagement, as well as two integrally moulded, edge-parallel holding means (2, 3) per side wall, in mutual releasable sliding engagement, on both sides of the perforations and of the stop means,
characterized in that
the building blocks (1, 1') with front plates (10) held in a releasable resilient manner have a rectangular front contour with a side ratio 2 : 1 and have in each case on their two longer side walls (1A, 1A') two perforations (6) with holding edges as well as in each case, symmetrically between them, incorporation openings (7) for projections (8), on the side edges of a space-dividing intermediate wall (9) fixed in a releasable manner therein, which for its part has a perforation (6) with holding edges for the holding of active building blocks of rectangular contour, which can be inserted.

2. Mosaic board according to claim 1, characterized in that the holding means (2, 3) are extended continuously over the building block height and the projecting stop means (4), on the side walls (1A, 1B) of the building block of the one type (1), has a displacement-blocking supporting surface (4A) for engagement with a counter surface on the stop means of the building block of the other type (1').

3. Mosaic board according to claim 1, characterized in that on the underside of the front plate (10) there is integrally moulded a frame (14) recessed from the edge to the inside, which rests against the inner sides of the side walls (1A, 1B, 1A', 1B') in a manner which prevents displacement.

4. Mosaic board according to claim 1, characterized in that the gap, formed through the lack of at least one building block (1, 1'), is used for the incorporation of measuring, switching and/or control devices, to be arranged outside a building block, in connection with carrying and/or covering parts held on at least one building block.

5. Mosaic board according to claim 4, characterized in that the carrying parts are constructed as carrying frames, which are supported on the front plates (10) of the building blocks (1, 1'), whereby the devices fixed in the carrying frames are held in stop connection with the perforations (6) of the side walls of adjacent building blocks.

6. Mosaic board according to claim 4, characterized in that the covering part as an angle building block (16) has a square front surface (17) with edge length, one, projecting on one side at a right angle over a fastening wall (18), and on the outer side of the fastening wall (18) there is integrally moulded a fastening angle (19), which can be brought into engagement with a perforation (6) of the adjacent building block (1, 1'), and in that the underside of the fastening wall (18) is provided with resilient projections (20) which can be brought into engagement with the under edge of the adjacent building block (1, 1').

7. Mosaic board according to claim 6, characterized in that recesses (21) are applied for devices or instruments in the front surface or the front surfaces of angle building blocks.

**Revendications**

1. Panneau mosaïque comportant une face frontale fermée, qui est formée, sans grille de support, par des modules parallélépipédiques (1) de deux types différents, qui sont disposés d'une manière alternée et en étant rangés de façon serrée les uns contre les autres d'une manière amovible et sont ouverts sur leur face arrière, tandis que leurs plaques avant amovibles (10) sont disposées de niveau entre elles, tous les modules comportant, au niveau de leurs parois latérales rectangulaires, des ouvertures (6) comportant des bords de retenue parallèles à la face avant, pour des modules particuliers (16) retenus élastiquement de façon amovible, ainsi que des moyens d'encliquetage (4) formés par moulage, qui empêchent tout déplacement et engrènent réciproquement d'une manière amovible, et, pour chaque paroi latérale, deux moyens de retenue (2,3) formés par moulage, qui engrènent réciproquement avec glissement, d'une manière amovible, et comportent des arêtes parallèles, des deux côtés des ouvertures et des moyens d'encliquetage,
caractérisé par le fait que les modules (1,1'), qui comportent des plaques avant (10) retenues élastiquement, de façon amovible, possèdent un contour frontal rectangulaire, dont le rapport des côtés est égal à 2:1, et possèdent, sur leurs deux parois latérales les plus longues (1A,1A'), deux ouvertures respectives (6) comportant des bords de retenue ainsi que, dans une position symétrique entre ces ouvertures, des ouvertures respectives (7) de logement pour des parties saillantes (8), sur les bords latéraux d'une paroi intercalaire (9), qui est fixée de façon amovible dans ces ouvertures, subdivise l'espace et possède, pour sa part, une ouverture (6) comportant des bords de retenue, pour retenir des modules actifs possédant un contour carré, qui peuvent être insérés.

2. Panneau mosaïque suivant la revendication 1, caractérisé par le fait que les moyens de retenue (2,3) s'étendent continûment sur toute la hauteur des modules et que les moyens d'encliquetage saillants (4) présents sur les parois latérales (1A,1B) du module d'un type (1) possèdent une surface d'appui (4A), qui empêche tout décalage et est destinée à s'engager contre une surface antagoniste prévue sur les moyens d'encliquetage du module de l'autre type (1').

3. Panneau mosaïque suivant la revendication 1, caractérisé par le fait que sur la face inférieure de la plaque avant (10) est formé par moulage un cadre (14), qui est disposé en retrait vers l'intérieur par rapport au bord et s'applique, en empêchant tout déplacement, contre les faces intérieures des parois latérales (1A,1B,1A',1B').

4. Panneau mosaïque suivant la revendication 1, caractérisé par le fait que l'espace vide formé par l'absence d'au moins un module (1,1') est utilisé pour loger des appareils de mesure, de commutation et/ou de commande, qui doivent être disposés à l'extérieur d'un module, en liaison avec des éléments de support et/ou de revêtement retenus sur au moins un module.

5. Panneau mosaïque suivant la revendication 4, caractérisé par le fait que les organes de support sont agencés sous la forme de cadres de support, qui prennent appui sur les plaques avant (10) des modules (1,1'), les appareils fixés dans le cadre de support étant retenus selon une liaison d'encliquetage avec les ouvertures (6) des parois latérales de modules voisins.

6. Panneau mosaïque suivant la revendication 4, caractérisé par le fait que l'élément de masquage possède, en tant que module en forme de cornière (16), une surface frontale carrée (17), qui fait saillie unilatéralement à angle droit sur une paroi de fixation (18) et possède une longueur de côté unité et qu'une cornière de fixation (19) pouvant être engagée dans une ouverture (6) du module voisin (1,1') est formée par moulage sur la face extérieure de la paroi de fixation (18) et que la face inférieure de la paroi de fixation (18) comporte des parties saillantes élastiques (20), pouvant être amenées en prise avec le bord inférieur du module (1,1') voisin.

7. Panneau mosaïque suivant la revendication 6, caractérisé par le fait que des évidements (21) servant à loger des appareils ou des instruments sont ménagés dans la ou les faces frontales de modules en forme de cornières.

FIG 3

FIG 1

FIG 2

FIG 6

FIG 5

FIG 4

FIG 8

FIG 7